# EUROPÄISCHE PATENTSCHRIFT

(11) **EP 2 666 708 B1**
(45) Veröffentlichungstag und Bekanntmachung des Hinweises auf die Patenterteilung: **16.10.2019**
(21) Anmeldenummer: 13002647.9
(22) Anmeldetag: 21.05.2013
(51) Int. Cl.: B63B 1/14, B63B 1/18, B63B 1/28, B63H 25/02, B63H 16/20, B63H 21/17, B60F 3/00, B62K 13/00, B63B 35/79, B63H 21/175

(54) **WASSERFAHRZEUG MIT MUSKELKRAFTANTRIEB**
WATERCRAFT WITH MUSCLE POWER DRIVE
VÉHICULE AQUATIQUE DOTÉ D'UN ENTRAÎNEMENT À PROPULSION MUSCULAIRE

(30) Priorität: 22.05.2012 DE 202012005066 U; 22.05.2012 DE 202012005027 U; 22.05.2012 DE 202012005069 U
(43) Veröffentlichungstag der Anmeldung: 27.11.2013
(73) Patentinhaber: Bisinger, Lothar, 72348 Rosenfeld-Heiligenzimmem (DE)
(72) Erfinder: Bisinger, Lothar, 72348 Rosenfeld-Heiligenzimmem (DE)
(74) Vertreter: Klocke, Peter

(56) Entgegenhaltungen:
- WO-A1-2005/105572
- WO-A1-2011/032293
- CA-A1- 2 209 047
- CH-A5- 662 790
- CH-A5- 671 937
- DE-U1- 8 906 452
- US-A- 535 623

## Beschreibung

Die Erfindung betrifft ein Wasserfahrzeug mit den Merkmalen gemäß Anspruch 1. Aufgabe der Erfindung ist, einen an Land oder auf einem Trainingsgerät ausgeführten Ausdauersport auch auf dem Wasser, bevorzugt auf stehenden Wasserflächen zu praktizieren. Dabei ist es insbesondere die Aufgabe der Erfindung, ein sportliches Bewegungsmuster zu erlauben, das der Praxis an Land weitestmöglich entspricht Insbesondere soll das Bewegungsmuster des Radsports oder des Laufsports auf die Fortbewegung auf dem Wasser Obertragen.werden. Dazu gehört, dass sowohl die Art des Antriebs als auch der Lenkung den gewohnten Aktionen nahekommt. Auch ist es ein Ziel der Erfindung, eine sportliche Fortbewegungsgeschwindigkeit zu erreichen. Es ist außerdem ein Ziel der Erfindung, dass als Antriebseinheit ein ganz normales Fahrrad zum Einsatz kommt, beispielsweise das normale Straßenrennrad des Benutzers, so dass das Wasserfahrzeug ein Zubehörteil zum Fahrrad bildet, analog zu einem Rollentrainer im heimischen Trainingsraum. Es ist deshalb auch ein Ziel der Erfindung, dass das Wasserfahrzeug hierdurch wesentlich preisgünstiger ist als ein vollständiges Tretboot mit eigener Antriebseinheit und dass relativ wenige, leicht zu transportierende und zu lagernde Bauteile zusätzlich zum ohnehin vorhandenen Fahrrad zu beschaffen sind. Von besonderem Vorteil ist es, wenn auch diese Bauteile für zusätzliche Anwendungen zu gebrauchen sind, wie die Verwendung einer Schwimmereinheit auch für Windsurfing, Paddeln oder Rüdern.

Da ein Wasserfahrzeug in jedem Fall höhere Fahrwiderstände überwinden muss als ein Fahrrad für den Landeinsatz, ist es ein Ziel der Erfindung, zur Oberwindung dieser Fahrwiderstände eine höhere Antriebsenergie zur Verfügung zu haben als für den reinen Straßen-Fahrradsport. Diese höhere Antriebsleistung kann in idealer Weise durch einen elektrischen Zusatzantrieb eingespeist werden, der in der Art der sogenannten E-Bikes jeweils proportional zur muskulär geleisteten Arbeit zusätzliche elektrische Energie einspeist
Es sind viele Lösungen für Wasserfahrzeuge mit Tretantrieb bekannt. Dabei handelt es sich überwiegend um Lösungen, die keinen Ausdauertrainings- oder Leistungssportgedanken zum Ziel haben. Außerdem nimmt die Besatzung dieser Fahrzeuge nicht die für einen möglichst effektiven Energieeinsatz optimale Sitzposition eines Fahrrad- bzw. Rennradfahrers ein.

Es sind jedoch auch Lösungen bekannt geworden, die eine leistungssportliche Fortbewegung zum Ziel haben. Das US5,088,944 beschreibt ein Wasserfahrzeug, das durch einen Tretantrieb wie ein herkömmliches Fahrrad angetrieben wird. Der Fahrer nimmt eine beim Fahrradfahren übliche Sitzposition ein und lenkt das Fahrzeug Ober einen Lenker vergleichbar einem Fahrrad. Allerdings kommt als Antriebseinheit kein herkömmliches Fahrrad zum Einsatz, sondern ein spezieller, aufwendiger Gestellaufbau. Außerdem wird das Fahrzeug zwar über einen drehbaren Vorderlenker gesteuert, es fehlt aber vollständig die Möglichkeit, sich wie beim wirklichen Fahrradfahren in die Kurve zu neigen, da der Gesamtaufbau auf zwei herkömmlichen Katamaran-Schwimmern lagert, die eine Drehung der Anordnung um die Längsachse nicht erlauben. Der wesentliche Erfindungsgedanke des US5,088,944 ist es, ein leicht und klein zusammenklappbares Wasserfahrzeug zu schaffen.

Das US5,626,501 beschreibt ebenfalls eine Lenkung über einen Vorderlenker, wobei über den Lenker ein vorderer Schwimmer wie ein Vorderrad gesteuert wird. Es enthält aber weder den Gedanken, ein herkömmliches Fahrrad als Antriebseinheit zu verwenden, noch die ergonomisch günstige Sitzposition eines herkömmlichen Fahrrads. Es ist auch keine Kurvenneigung wie bei einem herkömmlichen Fahrrad möglich, da der Hinteraufbau auf zwei Katamaranschwimmern ruht. Gleich wie das US5,626,501 verwendet auch die DE19606365 insgesamt drei Schwimmkörper, die eine Steuerung des Wasserfahrzeugs in der Art eines Dreirads erlaubt, aber nicht wie bei einem Fahrrad mit Kurvenneigung. Die DE19606365 enthält jedoch den Gedanken, als Antriebseinheit ein herkömmliches Fahrrad zu verwenden, so daß keine Kosten für die Antriebseinheit aufzuwenden sind. Es müssen allerdings die Räder entfernt werden. Auch muss die Geometrie des Fahrradrahmens präzise zu der auf der Schwimmereinheit angebrachten Befestigungseinheit passen, weshalb nicht ein beliebiges, sondern ein genau passendes Fahrrad verwendet werden muss. Nach der Lehre des US5,387,140 wird als Antriebseinheit für ein Wasserfahrzeug ein herkömmliches ein- oder mehrsitziges Fahrrad verwendet. Die Kraftübertragung auf eine Schiffschraube erfolgt über das Hinterrad und eine Laufrolle, die den Propeller antreibt. Das Hinterrad verbleibt also am Fahrrad. Auch bei dieser Lösung ist eine Querneigung des Fahrzeugs bei Kurvenfahren nicht möglich, da eine herkömmliche Katamaran-Schwimmeranordnung verwendet wird.

Gemäß der 5,443,405 wird als Antriebseinheit ein komplettes Fahrrad verwendet einschließlich Rädern. Der Antrieb erfolgt über Rollen wie bei bekannten Rollentrainern für den Gebrauch im Trainingsraum, wobei die Rollen mit zwei Antriebspropellern verbunden sind. Die Antriebseinheit wird auf einem Surfbrett oder einem ähnlich einem Surfbrett gestalteten Schwimmer montiert. Ein solcher Schwimmer verhält sich nicht ausreichend kippstabil, weshalb das Fahrzeug mit zwei Stützschwimmern ausgestattet ist. Durch die Stützschwimmer ist auch dieses Wasserfahrzeug nicht in der Lage, zur Kurvenfahrt eine Querneigung wie beim Fahrradfahren einzunehmen. Bei Verwendung eines handelsüblichen Fahrrads und eines ebensolchen Surfboards besteht ein besonderer Vorteil dieser Lösung darin, daß nur noch wenige, preiswerte und kleinvolumige Zusatzbauteile benötigt werden.

Die US 6,309,263 beschreibt ein Wasserfahrzeug mit Tretantrieb, das über einen Lenker und über Kurvenlage wie ein Fahrrad gesteuert zu werden, Um dies zu erreichen ist aber ein sehr aufwendiger und sehr großer Aufbau erforderlich. Es wird kein herkömmliches Fahrrad verwendet, sondern eine spezielle aufwendige Antriebseinheit und es wird ein sehr langgestreckter Schwimmkörper und eine aufwendige Steuerungskinematik verwendet. Die Größe und die aufwendig Gestaltung schließt eine Anwendung als einfaches Freizeitgerät aus.

Aus der CA 2 209 047 A1 ist ein Wasserfahrzeug bekannt, welches eine hydrodynamische Gleitfahrt durchführen kann, jedoch besitzt dieses Wasserfahrzeug keine Ausleger, weshalb bei diesem Wasserfahrzeug im Stillstand eine sehr hohe Gefahr besteht, dass das Wasserfahrzeug umkippt.

Aus der DE 89 06 452 U1 ist ein Wasserfahrzeug bekannt, welches ein langgestrecktes Gleitbrett und Ausleger hat, die ständig mehr oder weniger tief in das Wasser eintauchen und ständig eine Teillast des Wasserfahrzeugs tragen, während die Hauptlast vom zentralen Schwimmkörper 10 übernommen wird. Ein vollständiges Abheben der Ausleger und auch des Schwimmkörpers von der Wasseroberfläche, um eine hydrodynamische Gleitfahrt durchführen zu können, ist bei der DE 89 06 452 U1 nicht möglich.

Keine der vorbekannten Entwicklungen enthält einen Gedanken, wie der gegenüber dem Landbetrieb weit erhöhte Strömungswiderstand überwunden oder kompensiert werden kann. Keine vorbekannte Entwicklung enthält deshalb den Gedanken, wenigstens annährend fahrradtypische Geschwindigkeiten zu erreichen.

Die Idee eines Wasserfahrzeugs mit Tretantrieb und zusätzlicher Elektrounterstützung wird aber bereits in der WO 2011/032293 beansprucht. Darin geht es allerdings nicht um ein Wasserfahrzeug mit dem sportlichen Anspruch einer Fortbewegung hinsichtlich Geschwindigkeit und Fahrtechnik wie mit einem landgestützten Fahrrad, sondern um eine Tretboot für Vergnügungsfahrten, das durch Elektrounterstützung eine mühelosere und etwas schnellere Fortbewegung erlaubt als mit einem konventionellen Tretboot.

Die vorliegende Erfindung sieht ein mit Muskelkraft betriebenes Wasserfahrzeug vor, das der Sportler mit gleichen Bewegungsmustern betreibt wie bei der äquivalenten Sportart an Land. Dadurch wird der Sportler muskulär, motorisch und organisch in idealer Weise für die äquivalente Sportart trainiert. Umgekehrt ist der Sportler durch die Erfahrung mit der äquivalenten Sportart an Land ideal für die Fortbewegung mit dem Wasserfahrzeug trainiert.
Das Wasserfahrzeug umfasst eine Antriebseinheit und eine Schwimmereinheit Bevorzugt wird das Wasserfahrzeug wie ein Fahrrad mit einem Tretantrieb bewegt. Es bietet sich ganz besonders an, dasselbe Fahrrad als Antriebseinheit zu verwenden, das der Sportler auch an Land benutzt. Dieses bietet für sein Training die optimalen Voraussetzungen. Dieses Fahrrad kann je nach Ausführungsform des Wasserfahrzeugs vollständig oder nach Demontage eines oder beider Räder auf der Schwimmereinheit des Wasserfahrzeugs befestigt werden. Die Verwendung eines ohnehin vorhandenen Fahrzeugs hat den zusätzlichen Vorteil, dass für das Wasserfahrzeug keine eigene Antriebseinheit benötigt wird.
Wenn das Fahrrad komplett mit Hinterrad montiert wird, dann erfolgt der Antrieb über eine Rolle nach dem Prinzip eines stationären Rollentrainers, wobei die Antriebsleistung von der Rolle auf eine Schifischraube oder einen Impellerantrieb umgelenkt wird.
Alternativ wird das Hinterrad des Fahrrads entfernt und es wird statt des Hinterrads ein Antriebsrad vorzugsweise für eine Kette, einen Flach- oder einen Zahnriemen in der Hinterradgabel montiert, über welche eine Schiffschraube oder ein Impeller angetrieben wird.
Die Schwimmereinheit ist auf geringen Strömungswiderstand optimiert, um der sportlichen Fortbewegung an Land nahe zu kommen. Prinzipiell kann die Auftriebswirkung der Schwimmereinheit im Betriebszustand bei höherer Geschwindigkeit auf der Verdrängerwirkung oder auf den Gleitereigenschaften des oder der Schwimmkörper beruhen. Verdränger sind Schwimmkörper, die so gestaltet sind, dass sie bei wachsender Geschwindigkeit nicht oder wenig aus der Wasserfläche angehoben werden. Zur Erzielung eines geringen Strömungswiderstandes werden sie mit sehr schlanker und langgestreckter Form ausgeführt. Gleiter werden bei ausreichender Geschwindigkeit von hydrodynamischem Auftrieb getragen und können dadurch so weit angehoben werden, dass sie nicht mehr in die Wasseroberfläche eintauchen, sondern nur noch auf ihr gleiten. Gleiter haben eine im Wesentlichen flache Unterseite, können auch breit und gedrungen sein und haben oft spezielle Strukturen wie Abreißkanten zur Verringerung der Gleitreibung.

Die Schwimmereinheit ist so ausgelegt, dass sie bei Auslegungsgeschwindigkeit als Gleiter mit hydrodynamischem Auftrieb wirkt. Eine derartige Schwimmereinheit ermöglicht grundsätzlich geringere Strömungswiderstände und damit auch höhere Fahrgeschwindigkeiten. Zum Zwecke der fahrradäquivalenten Fortbewegung und Steuerung muß die Schwimmereinheit nicht zu breit und um ihre Längsachse leicht zu rollen sein. Eine solche Schwimmereinheit verhält sich aber im Stillstand kipp-instabil wie ein Fahrrad, was das Besteigen, Losfahren und Anhalten erheblich erschwert und ein einfaches Treibenlassen praktisch nicht erlaubt. Deshalb ist die Schwimmereinheit so auszulegen, daß sie im Stillstand und bei Langsamfahrt als Verdränger das Gesamtgewicht einschließlich Fahrer trägt und beim Besteigen ausreichend kippstabil ist. Ausreichende Kippstabilität im Stillstand und Rollfreudigkeit um die Längsachse bei der Kurvenfahrt sind zu erreichen, indem zumindest der hintere Schwimmer, der die Hauptlast trägt, teilweise breit ausgelegt oder mit Auslegerschwimmern versehen ist, wobei bei Gleitfahrt mit hydrodynamischem Auftrieb der breite Teil des Schwimmerkörpers oder die Auslegerschwimmer aus dem Wasser auftauchen.

Die Schwimmereinheit des Wasserfahrzeugs kann nur einen Schwimmkörper umfassen, der vorzugsweise als Gleiter ausgebildet ist. In diesem Fall ist eine Steuerflosse an der Lenkersteuerung der Antriebseinheit angelenkt. Wenn als Antriebseinheit ein Fahrrad aus dem Festlandgebrauch eingesetzt wird, erfolgt diese Anlenkung beispielsweise am Vorderrad oder an der Vorderradgabel. Die Steuerflosse kann sich am Heck der Schwimmereinheit befinden. Vorzugsweise befindet sie sich aber eher in der Verlängerung des Steuerrohrs oder der Steuerachse der Antriebseinheit, entsprechend der Positionierung des Vorderrads beim konventionellen Fahrrad. Diese Anordnung ermöglicht Kurvenfahreigenschaften, die einem konventionellen Fahrrad sehr nahe kommen. Eine solche einteilige Schwimmereinheit ist sehr ähnlich ausgelegt wie ein großes Surfbrett. Die Ansteuerung der Lenkflosse erfolgt durch eine Durchführung in der Schwimmereinheit. Es ist möglich, die Schwimmereinheit nach Entfernung der Antriebseinheit auch für Windsurfing umzurüsten, wobei die Durchführung für die Steuerung zur Aufnahme des Mastfußes dienen kann. Die Schwimmereinheit kann auch einen vorderen und einen hinteren Schwimmkörper umfassen, wobei der hintere Teil der Antriebseinheit, insbesondere das Hinterrad oder die hintere Radgabel auf dem hinteren Schwimmkörper, der vordere Teil, insbesondere das Vorderrad oder die Vorderradgabel auf dem vorderen Schwimmkörper befestigt ist. In diesem Fall erfolgt die Steuerung dadurch, dass der vordere Schwimmkörper bei Lenkerausschlag gegen den hinteren Schwimmkörper verdreht wird.

Der hintere Schwimmkörper wird größer sein als der vordere, da die hintere Befestigung der Antriebseinheit die Hauptlast der Besatzung trägt. Die Schwimmereinheit kann auch so ausgelegt sein, dass der vordere Schwimmkörper nur bei Stillstand oder Verdrängerfahrt eingetaucht ist und beim Übergang zu Gleitfahrt aus der Wasseroberfläche auftaucht. Gleitfahrt bei höherer Geschwindigkeit erfolgt dann nur noch auf dem hinteren Schwimmkörper. Die Steuerung erfolgt in diesem Fall durch die an der Unterseite des vorderen Schwimmkörpers befestigte Lenkflosse. In dieser Ausführung muss der vordere Schwimmkörper nicht über Gleitereigenschaften verfügen und kann deshalb als Verdränger optimiert sein.

Grundsätzlich kann eine strömungsgünstige Schwimmereinheit auch mit Katamaranschwimmkörpern ausgeführt sein. So ist denkbar, an Stelle eines einzelnen hinteren Schwimmkörpers zwei Schwimmkörper in Katamarananordnung zu verwenden. Auch der vordere Schwimmkörper könnte in zwei Katamaranschwimmkörper aufgeteilt sein. Auch wenn keine Aufteilung in vordere und hintere Schwimmkörper erfolgt, kann die Schwimmereinheit als Katamaran mit über die Gesamtlänge verlaufenden Schwimmkörpern ausgeführt sein.

Alle genannten Katamaranvarianten haben den Nachteil, dass eine Kurvenfahrt mit Innenlage nicht möglich ist. Sie haben aber den Vorteil, dass die Schwimmereinheit in Form mehrerer wesentlich kleinerer Schwimmkörper vorliegt, die leicht zu transportieren sind. Sie haben den weiteren erheblichen Vorteil, dass sie eine beliebig kippstabile Ausführung erlauben, die das Hantieren im Stillstand und beim aufsteigen sehr erleichtert.

Den letztgenannten Vorteil kann man nutzen, ohne auf die Kurvenfahreigenschaften zu verzichten, indem die Schwimmereinheit nur einen Gleitschwimmkörper oder einen vorderen und einen hinteren Schwimmkörper umfasst, der oder die in Gleitfahrt für den Auftrieb des Wasserfahrzeugs sorgen, dass aber an diesem Gleitschwimmkörper oder zumindest an dem hinteren Gleitschwimmkörper beidseitig Auslegerschwimmkörper angebracht sind, die nur im Stillstand und bei Verdrängerfahrt in das Wasser eintauchen und beim Übergang in Gleitfahrt von der Wasseroberfläche abheben. Bei dieser Ausführung kann der Gleitschwimmkörper oder die Gleitschwimmkörper kleiner ausgeführt sein, derart, dass sein Volumen oder ihr Volumen nicht alleine in der Lage sein müssen, das Gewicht des Wasserfahrzeugs in der Verdrängerfahrt zu tragen.

Hydrodynamischer Auftrieb wird durch unterhalb der Wasseroberfläche angeordnete Tragflächen erzeugt, wobei eine Tragfläche als vorderer Schwimmkörper und eine Zweite als hinterer Schwimmkörper anzuordnen ist. Um auch Verdrängerfahrt und ausreichenden Auftrieb im Stillstand, sowie ausreichende Kippstabilität zu erreichen, ist zumindest der hintere Schwimmkörper zumindest mit einem zusätzlichen oberhalb der Tragfläche angeordneten Verdrängerschwimmkörper oder mit zwei Verdrängerschwimmkörpern in Auslegerunganordnung auszurüsten. Auftriebsfahrt auf Tragflächen mit aus dem Wasser herausgehobenen Verdrängerschwimmkörpern hat den besonderen Vorteil, dass der oder die Verdrängerschwimmkörper dabei auf jeden Fall so weit über die Wasseroberfläche angehoben werden können, dass sie eine Querneigung zur Kurvenfahrt nicht behindern. Die genauere Auslegung eines Wasserfahrzeugs als Tragflächenwasserfahrzeug wird an Hand der Figuren näher erläutert.

Bekannte, für Rekordfahrten ausgelegte Wasserfahrzeuge mit Muskelkraftantrieb erreichen bei hydrodynamisch optimierter Auslegung Geschwindigkeiten bis zu mehr als 30 km/h, allerdings nur über sehr kurze Fahrstrecken von rund 100 Meter. Im praktischen Sport-, Trainings- oder auch Tourenbetrieb wird die Reisegeschwindigkeit in jedem Fall geringer sein als beim Straßenradsport, da der hydrodynamische Widerstand der Schwimmkörper auf jeden Fall größer ist als der Rollwiderstand eines Fahrrads. Ziel muß daher eine Auslegungsgeschwindigkeit sein, die unterhalb der Geschwindigkeit beim normalen Radsport liegt.

Hieraus ergibt sich eine Einschränkung bei dem Ziel, eine Fortbewegung zu verwirklichen, die der Fortbewegung im Straßenradsport nahe kommt.

Um diese Einschränkung teilweise auszugleichen und eine Auslegungsgeschwindigkeit zu erreichen, die der Geschwindigkeit des Straßenradsports näher kommt, gibt es mehrere Möglichkeiten:
Eine Möglichkeit ist, mehrsitzige Wasserfahrzeuge einzusetzen mit Antriebseinheiten vorzugsweise in Tandemanordnung oder auch in mehrfacher Tandemanordnung.

Die Unterstützung des Antriebs wird durch einen elektromotorischen Hilfsantrieb erzeugt. Es ist im Fahrradsport bekannt und verbreitet, elektromotorische Hilfsantriebe einzusetzen, bei denen elektronisch gesteuert abhängig vom muskulären Energieeinsatz zusätzlich elektrische Energie beigesteuert wird. Es wird vorgeschlagen, ein System einzusetzen, das, wie aus dem Fahrradsport grundsätzlich bekannt, einen gewissen, vorzugsweise einstellbaren Anteil der muskulär aufgewendeten Energie zusätzlich als elektrische Energie zuführt. Dadurch kann erreicht werden, dass eine Fortbewegung auf Wasser in einem vergleichbaren Geschwindigkeitsbereich und eine Fortbewegungs- und Kurvenfahrtdynamik wie beim Straßenradsport erzielt wird, so dass durch den Sportler subjektiv keine Einschränkung durch eine gegenüber dem Straßenradsport erhöhte Widerstandskraft wahrgenommen wird.

Die elektrische Antriebseinheit kann in die Schwimmereinheit des Wasserfahrzeugs integriert sein, so dass die elektrische Energie dem Schiffschraubenantrieb zugeführt wird oder sie ist der Antriebseinheit, also dem Fahrrad zugeordnet, beispielsweise identisch wie bei handelsüblichen Fahrrädern mit elektrischem Zusatzantrieb. Dabei können auch kommerziell erhältliche Zusatzantriebskits, bestehend aus Nabenmotor, Batterie und Steuereinheit eingesetzt werden, die optional an handelsüblichen Fahrrädern angebracht werden können, so dass die Verwendung eines elektrischen Zusatzantriebs nicht zwingend bei der Auslegung vorgesehen sein muss, sondern optional nachgerüstet werden kann.

Wenn wie vorstehend der elektrische Zusatzantrieb der Antriebseinheit zugeordnet ist, dann kann die Antriebseinheit nach der Entfernung von der Schwimmereinheit als Fahrrad mit Elektrounterstützung, als sogenanntes E-Bike eingesetzt werden, wenn die Elektroeinheit als modular ergänzbare Zusatzeinrichtung vorliegt, was kommerziell bereits heute erhältlich ist, dann kann die Antriebseinheit darüber hinaus als normales Fahrrad oder als E-Bike eingesetzt werden. An Stelle der aus E-Bikes bekannten Form des mechanischen Antriebs, dem über einen Nabenmotor an Tretlager oder Hinterradnabe, bei einem Wasserfahrzeug auch an einer Antriebsrolle auf der Schwimmereinheit oder auch an der Nabe der Schiffschraube zusätzlich elektrische Energie zugespeist wird, besteht die attraktive Möglichkeit eines rein elektrischen Antriebs. Hierbei betreibt der Tretkurbelantrieb einen elektrischen Generator. Die Schiffschraube wird durch einen Elektromotor angetrieben. Die elektrische Energie des Generators versorgt den Antriebsmotor. Hierdurch entfällt jede mechanische Energieübertragung von der Antriebseinheit zur Schiffschraube und wird durch elektrische Stromkabel ersetzt. Über eine elektronische Steuereinheit kann aus einer Versorgungsbatterie zusätzliche elektrische Energie zugespeist werden, so dass der Antriebsmotor mit höherer elektrischer Leistung betrieben werden kann, als vom Generator bereitgestellt. Die elektrische Energie aus der Versorgungsbatterie kann durch die Steuerelektronik in einem konstanten Verhältnis zugespeist werden, so dass jegliche Einstellung durch den Fahrer entfallen kann. Es kann aber auch eine Regeleinheit für die Einstellung der Steuerelektronik vorgesehen sein, die vorzugsweise am Lenker der Antriebseinheit angeordnet ist, wobei diese Regeleinheit beispielsweise die folgenden Einstellungen vorsehen kann:
- Antrieb ausschließlich über die vom Generator bereitgestellte Energie
- Antrieb durch die Energie des Generators und zusätzliche eingespeiste Energie aus der Versorgungsbatterie, wobei das Verhältnis der vom Generator zu der aus der Versorgungsbatterie eingespeisten Energie in weitem Verhältnis variiert werden kann.
- Antrieb mit Energie ausschließlich aus der Versorgungsbatterie, so dass Tretantrieb entfallen kann.
- Nutzung der Energie des Generators zum Aufladen der Versorgungsbatterie

Ein Wasserfahrzeug der beschriebenen Ausführung kann modular ausgeführt sein, derart, dass mehrere oder gegebenenfalls alle der folgenden Betriebsarten möglich sind:
- die Antriebseinheit kann nach dem Lösen von der Schwimmereinheit und gegebenenfalls Anbringen von Rädern als Fahrrad eingesetzt werden
- die Antriebseinheit kann als E-Bike eingesetzt werden
- die Schwimmereinheit kann nach Entfernen der Antriebseinheit für Windsurfing, Paddeln oder Rudern verwendet werden
- Das Wasserfahrzeug kann im reinen Elektrobetrieb als Motorboot verwendet werden, wobei diese Verwendung mit montierter und entfernter Antriebseinheit möglich sein kann.
- Die Antriebseinheit kann in Kombination mit einer Befestigungsvorrichtung als Heimtrainer, sogenannter Rollentrainer verwendet werden. Wenn der elektrische Generator der Antriebseinheit oder der Rolle des Rollenrainers zugeordnet ist, kann diese Kombination zusätzlich oder zugleich als Energieerzeuger zum Aufladen der elektrischen Versorgungsbatterie oder zum Betrieb von elektrischen Geräten verwendet werden.

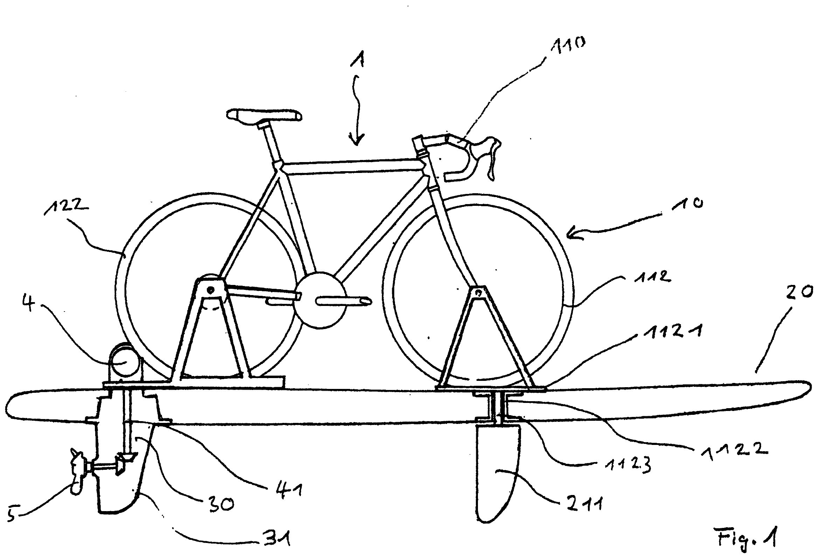

Weitere Merkmale der Erfindung werden im Folgenden an Hand der Figuren 1 - 8 erläutert.

Figur 1 zeigt eine erste Basisausführung eines Wasserfahrzeugs (1). Das Wasserfahrzeug umfasst eine Antriebseinheit (10) und eine Schwimmereinheit (20). Gemäß Figur 1 ist die Antriebseinheit ein vollständiges Fahrrad einschließlich Vorder (112)- und Hinterrad (122). Die Schwimmereinheit (20) besitzt alle Kennzeichen eines großvolumigen Windsurfboards mit der zusätzlichen Besonderheit einer Aufnahme für das Antriebselement (30) und einer Drehdurchführung (1122) für die Vorderradlenkung. Das Vorderrad 112 ist auf einer drehbaren Plattform (1121) montiert, die mit sich dem normalen Lenkausschlag des Fahrradlenkers (110) mitdreht. Diese Plattform (1121) ist auf einer Drehdurchführung (1122) durch die Schwimmereinheit (20) montiert. Auf dem Schaft (1123) der Drehdurchführung (1122) ist auf der Unterseite der Schwimmereinheit (20) die Lenkflosse (211) montiert.

In der Ausführung nach Figur 1 treibt das Hinterrad (122) der Antriebseinheit (10) die Antriebsrolle (4) eines Antriebselements (30) an. Von der Antriebsrolle (4) aus wird über ein Getriebe (41) die Schiftschraube (5) angetrieben.

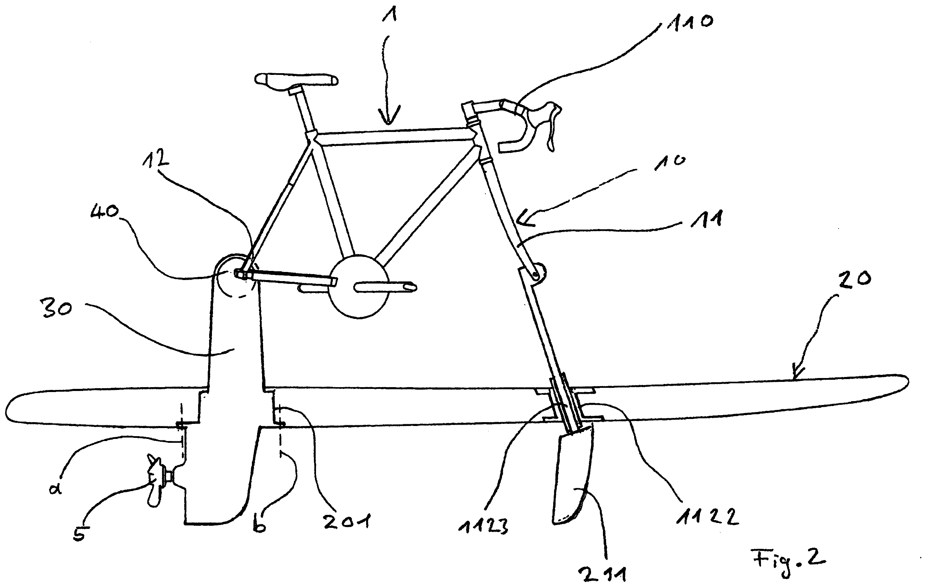

In Figur 1 ist das wasserdichte Gehäuse (31) des Antriebselements (30) transparent dargestellt Dadurch wird sichtbar, dass das Getriebe (41) als Kegelradgetriebe ausgeführt sein soll. Eine derartige Ausführung ist sinnvoll, es könnte aber auch ein Ketten-, Zahn- oder Flachriemenantrieb zum Einsatz kommen. An Stelle einer Schiffschraube (5) wäre denkbar, einen Impeller oder ein Schaufelrad einzusetzen. In einer Abwandlung der Ausführung gemäß Figur 1 wäre es ohne Weiteres möglich, die Ausführung der Lenkung einzusetzen, die in Figur 2 dargestellt ist, also ein Lenksystem mit ausgebautem Vorderrad.

Figur 2 zeigt eine alternative Basisausführung eines Wasserfahrzeugs (1). In dieser Ausführung sind beide Räder des Fahrrads ausgebaut. Es wäre aber auch denkbar, bei Ausführung des Antriebs gemäß Figur 2 die Vorderradlenkung gemäß Figur 1 mit eingebautem Vorderrad auszuführen. Die Schwimmereinheit (20) enthält eine Drehdurchführung (1122) für die Vorderradlenkung. Die Vorderradgabel (11) der Antriebseinheit (10) ist unmittelbar an dem Schaft (1123) angelenkt. Auf der Unterseite der Schwimmereinheit (20) ist eine Lenkflosse (211) an dem Schaft (1123) angelenkt und somit mit der Vorderradlenkung (110) drehbar. Das Hinterrad der Antriebseinheit (10) ist entfernt und stattdessen ist das Antriebsrad (40) des Antriebselements (30) in die Hinterradgabel (12) eingebaut. Von diesem Antriebsrad (40) aus wird Ober ein Getriebe die Schißschraube (5) angetrieben. Das Getriebe ist in Figur 2 nicht dargestellt. Es kann aber ebenso wie in Figur 1 dargestellt ein Kegelradgetriebe oder ein Ketten- oder ein Riemenantrieb verwendet werden, wobei die Kraftübertragung nicht von einer Antriebsrolle (4), sondern direkt vom Antriebsrad (40) auf Antriebsachse der Antriebseinheit erfolgt.

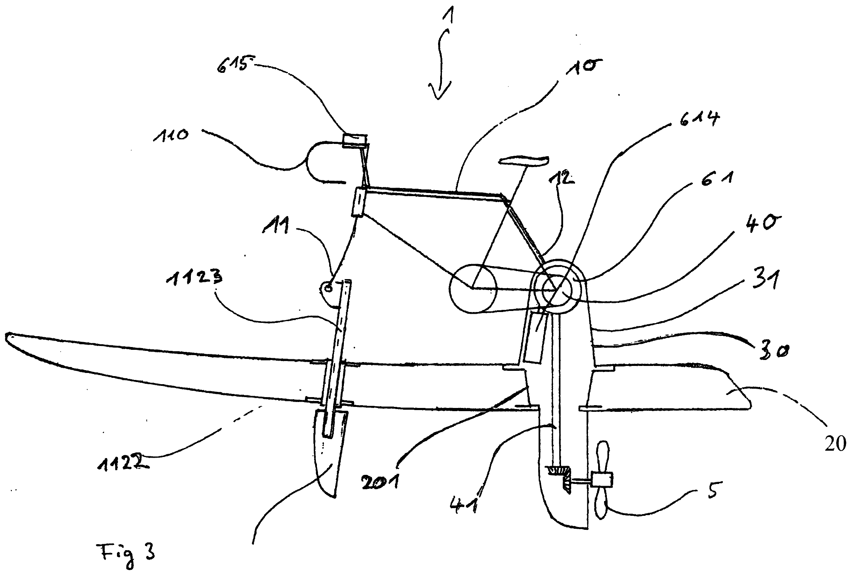

Es kann auch an Stelle eines mechanischen Getriebes über den Hinterradantrieb eine Hydraulikpumpe angetrieben werden, die über eine Hydraulikleitung einen Hydraulikmotor antreibt, der eine Schiffschraube antreibt. Diese Ausführung ist in keiner Figur dargestellt. Dagegen ist in Figur 3 dargestellt, wie eine Ausführung einer elektrischen Antriebsunterstützung unter unmittelbarer Weiterbildung der Lösung nach Figur 2 realisiert werden kann. In Figur 3 ist das Antriebselement (30), das grundsätzlich identisch gestaltet ist wie in Figur 2, transparent dargestellt, so dass das Kegelradgetriebe (41) sichtbar wird. Dort wo beim konventionellen Fahrrad ein Hinterrad eingesetzt ist, wird in dieser Ausführungsform das Antriebsrad (40) für das Kegelradgetriebe (41) gemeinsam mit einem Nabenmotor (61) eingebaut, wobei dieser Nabenmotor (61) grundsätzlich identisch ausgeführt sein kann, wie bei, wie bei einer Vielzahl handelsüblicher E-Bikes. Das Antriebsrad für das Kegelradgetriebe (41) wird durch den Nabenmotor (61) verdeckt. Eine Versorgungsbatterie (614) versorgt den Nabenmotor (61). Die Steuereinheit (615), optional verbunden mit einer Regeleinheit zur manuellen Einstellung wird gemäß dieser Darstellung wasserabgedichtet aus dem Gehäuse (31) an den Lenker (110) der Antriebseinheit (10) herausgeführt.

Die Antriebseinheit (10) gemäß Figur 2 und Figur 3 kann leicht von der Schwimmereinheit (20) gelöst werden, beispielsweise, indem man das Antriebselement (30) von der Hinterradgabel (12) und den Schaft (1123) von der Vorderradgabel (11) durch Schnellverschlüsse trennt, wie sie sonst zur Befestigung von Hinter- und Vorderrädern verwendet werden. Die Antriebseinheit (10) kann dann mit Vorder- und Hinterrad ausgestattet und zum Radfahren an Land verwendet werden. Bei der Darstellung gemäß Figur 3 verbleibt das Antriebselement (30) mit dem Nabenmotor (61) und der Versorgungsbatterie (614) auf der Schwimmereinheit (20). Wenn das Steuerelement (615). das ohnehin vom Lenker (110) gelöst werden muss, an dem Gehäuse (31) festgelegt wird, dann kann die Schwimmereinheit (20) unabhängig von der Antriebseinheit (10) auch für Motorbootfahrt genutzt werden. Es muss lediglich gegebenenfalls an dem Steuerschaft (1123), dort wo zuvor die Gabel (11) der Vorderradlenkung montiert war, eine (nicht dargestellte) Steuerstange montiert werden.

Weitere Ausführungen für einen elektrischen Unterstatzungsantrieb werden später an Hand der Figuren 11 und 12 beschrieben.

Gemäß Figur 2 sitzt das Antriebselement (30) in einem Schacht (201) in der Schwimmereinheit (20) und ist von der Unterseite der Schwimmereinheit (20) her befestigt. Beispielhaft sind geeignete Positionen zur Befestigung Ober Schrauben oder Schnellverschlüsse durch gestrichelte Linien dargestellt (a,b). Nach Lösen dieser Schnellverschlüsse oder Schrauben kann das Antriebselement (30) leicht komplett nach unten aus dem Schacht (201) gezogen werden.

Die Lenkflosse (211) kann leicht von dem Schaft (1123) gelöst werden. Der Schaft kann dann nach oben aus der Drehdurchführung (1122) gezogen werden. Die Schwimmereinheit (20) liegt dann vor in Form eines Windsurfboards mit zwei Öffnungen, die durch den Schacht (201) und die Drehdurchführung (1122) gebildet werden.

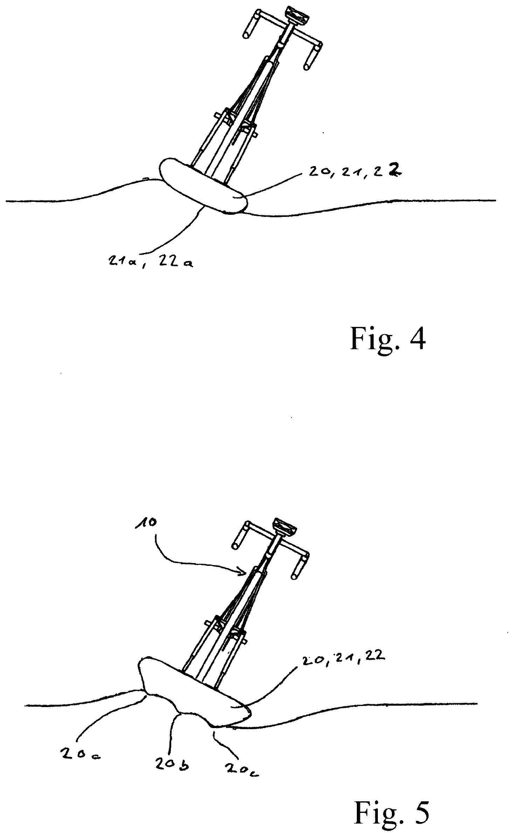

Als Schwimmereinheit kann grundsätzlich ein normales, jedoch großvolumiges Windsurfbrett verwendet werden, das als Modifikation einen Schacht für den Einbau eines Antriebselements und eine Drehdurchführung für die Vorderradlenkung erhält. Eine derartige Schwimmereinheit gleitet bei den angestrebten Geschwindigkeiten durch hydrodynamischen Auftrieb. Ein Schwimmkörper (20, 21, 22) in Gleitfahrt hat bei Kurvenfahrt von Haus aus die angestrebte Eigenschaft, sich sinnrichtig in die Kurve zu legen. Dieser Umstand ist in Figur 4 in einem Querschnitt durch das Wasserfahrzeug dargestellt, Ursache für dieses Verhalten ist, dass sich die Bugwelle in Kurvenfahrt auf der Außenseite des Schwimmkörpers (20, 21, 22) anstaut. Auf der gegenüberliegenden Seite bildet sich das zugehörige Wellental. Das erfindungsgemäße Wasserfahrzeug wird also in Gleitfahrt von sich aus das Bestreben haben, sich bei Kurvenfahrt sinnrichtig, also wie ein Fahrrad in die Kurve zu legen. Fig. 4 zeigt den beschriebenen Umstand schematisch
Es gibt allerdings eine Klasse moderner Surfbretter, die ähnlich ausgelegt ist wie der oder die Schwimmkörper des erfindungsgemäßen Wasserfahrzeugs, insbesondere Surfbretter für besonders gute Leistungen bei geringer Windgeschwindigkeit. Derartige Surfretter haben keine durchgehend flache Unterseite, sondern verfügen Ober einen bis zu 3 Kielen (20b, 20c). Sie verfügen Ober eine große Fläche und auch über eine erhebliche Dicke.

Bild 5 zeigt im Querschnitt einen bevorzugten Schwimmkörper (20, 21, 22). Der Schwimmkörper (20, 21, 22) soll auch langsame Verdrängerfahrt und Stillstand ohne Kippgefahr ermöglichen. Es soll außerdem möglich sein, auf dem treibenden Wasserfahrzeug (1) auf das Fahrrad zu steigen. Außerdem soll es möglich sein, nach einem Kentern aus dem Wasser wieder auf das Wasserfahrzeug (1)zu klettern und die Fahrt fortzusetzen. Dieser Anforderungen erfordern ein Gesamtvolumen des oder der Schwimmkörper, das eine Verdrängung von mindestens dem 1,5-fachen des Gewichts einschließlich der vorgesehenen Beladung verursacht. Weiterhin ist eine Breite erforderlich, die sich an sehr breiten Surfbrettern orientiert. Um eine große Kippstabilität zu erreichen, ist schließlich eine größere Dicke als bei üblichen Surfbrettern erforderlich. Um einer Kippbewegung ein hohes aufrichtendes Moment entgegenzusetzen, ist es erforderlich, daß sich das eintauchende Volumen auf der tiefer tauchenden Seite mit zunehmendem Kippwinkel möglichst stark erhöht. Das ist dann nicht mehr der Fall, wenn die Oberseite des Schwimmkörpers überspült wird. Durch eine ausreichende Bauteildicke kann dieses Überspülen bei relevanten Schräglagen vermieden werden.

Es wird vorgeschlagen, dass sich der Querschnitt des oder der Schwimmkörpers (20, 21, 22) nach unten hin verjüngt. Dies hat folgende Wirkungen: Der oder die Schwimmkörper können im Sinne einer Kippstabilität breit gestaltet werden. Die volle Breite taucht aber nur in gekippter Position auf der tiefer liegenden Seite ein. Der in Normalfahrt umspülte Körper ist aber deutlich schmaler und insbesondere in Verdrängerfahrt strömungsgünstiger, was insbesondere die Anfangsbeschleunigung und den Leistungsaufwand für den Übergang zur Gleitfahrt reduziert. Beim Kippen des Schwimmkörpers wird die effektive Breite auf der nach unten gekippten Seite größer, was die Kippstabilität abermals erhöht

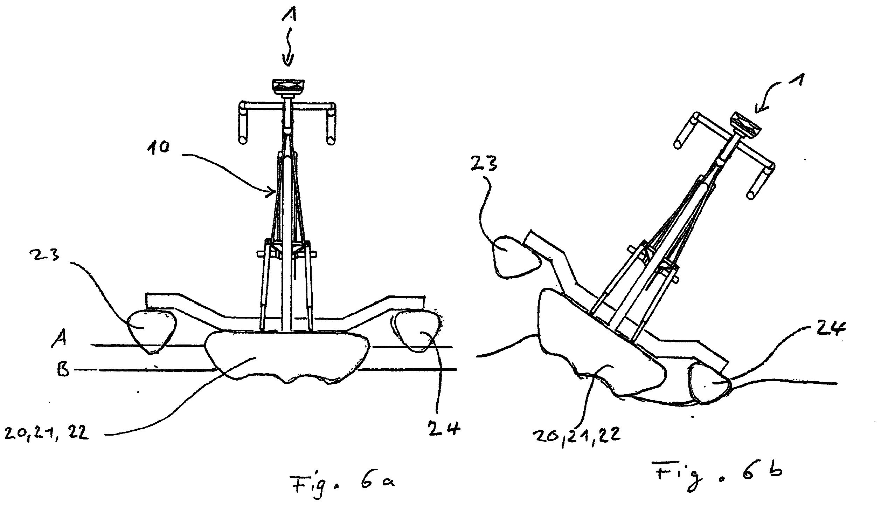

Für die aktive Steuerung der Schräglage ist die geringere wirksame Breite in Normalfahrt günstiger. Figur 6a,b zeigt eine Form der Schwimmer (20,21,22) gemäß der Ausführungsforn aus Figur 5, jedoch mit einer schmaleren Ausführung des oder der Schwimmer (20, 21, 22), da die Kippstabilität durch die Auslegerschwimmer (23, 24) gesichert ist. Der oder die Schwimmer (20, 21, 22) können auch insgesamt kleiner sein als die Schwimmer gemäß Fig. 5, weil die Auslegerschwimmer (23, 24) im Stillstand und langsamer Verdrängerfahrt unterstützenden Auftrieb liefern.

Es bezeichnet (A) die Höhe der Wasseroberfläche bei Stillstand oder Langsamfahrt und (B) die Höhe bei Gleitfahrt, jeweils in Relation zu den Proportionen des Wasserfahrzeugs (1)
Bei Gleitfahrt tauchen die Auslegerschwimmer (23,24) aus dem Wasser auf, so dass Kurvenfahrt mit Kurveninnenlage möglich wird. Die Schräglage ist allerdings limitiert, wie in Figur 6b erkennbar ist. Um beliebig große Schräglagen zu realisieren, müssen die Auslegerschwimmer (23, 24) hochgefahren werden oder sie müssen mit sehr kurzen Auslegern versehern sein, am besten quasi bündig an die eigentlichen Schwimmer (21, 22) anschließen. Diese Ausführung würde wiederum funktionell in die Nähe der in Figur 5 dargestellten Ausführung kommen, bei der die sich nach oben verbreiternde Schwimmerform für Kippstabilität bei Stillstand und langsamer Verdrängerfahrt sorgt.

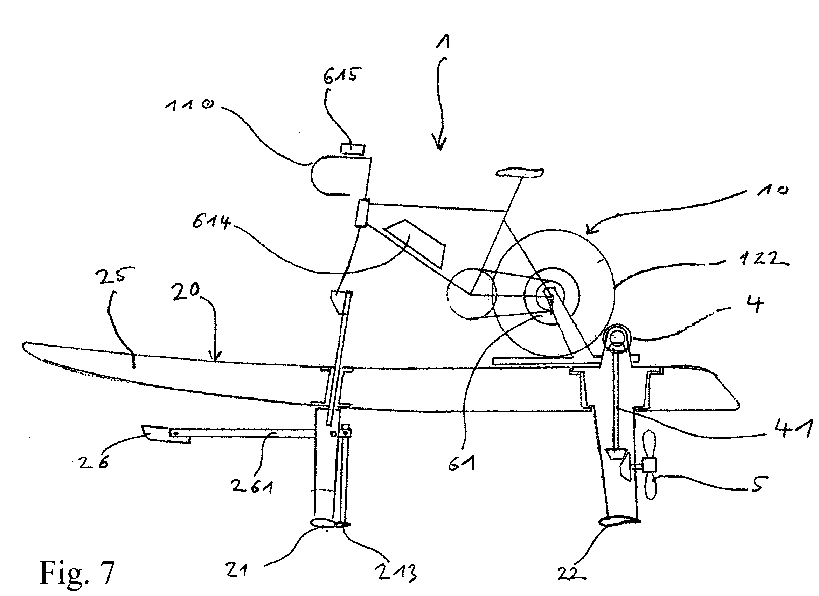

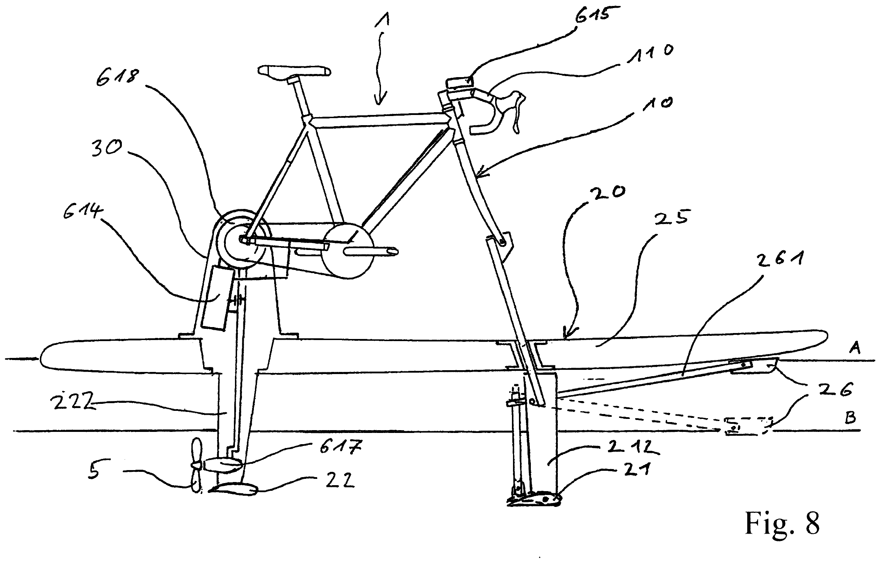

Ein für die Erfüllung der Aufgabe der vorliegenden Erfindung sehr geeignetes Schwimmkörperprinzip ist das Tragflügelkonzept, das in Figur 7 dargestellt ist. Die größte Widerstandskomponente bei einem Wasserfahrzeug ist der Wellenwiderstand und dieser entfällt bei diesem Tragflügelkonzept fast völlig. Ein Tragflügelwasserfahrzeug (1) mit günstiger Auslegung der als Tragflügel ausgebildeten vorderen und hinteren Schwimmkörper(21, 22) hat deshalb den geringstmöglichen Widerstand aller möglichen Wasserfahrzeuge, abgesehen von solchen Fahrzeugen, die überhaupt nicht durch die Auftriebskraft des Wassers getragen werden, wie Luftkissen- und Bodeneffekt-Fahrzeuge. Die eigentlichen Schwimmkörper sind der vordere (21) und der hintere (22) Tragflügel. Wie in den vorgenannten Ausführungsformen ist der vordere Schwimmkörper (21) mit der Lenkersteuerung (110) und der hintere Schwimmkörper (22) mit der Hinterradaufhahme der Antriebseinheit (10) verbunden. Entsprechend der Belastung ist der vordere Tragflügel (21) kleiner ausgelegt als der hintere Tragflügel (22). Der vordere Tragflügel umfasst entweder eine Höhenruderklappe (213) oder sein Anstellwinkel ist insgesamt veränderlich, wobei Höhenruderausschlag oder Anstellwinkel automatisch gesteuert werden. In Figur 7 wird die Ausführung mit einer Höhenruderklappe (213) dargestellt. Von anderen Tragflügelfehrzeugen grundsätzlich bekannt ist die Ansteuerung der Höhenruderklappe (213) oder des schwenkbaren vorderen Tragflügels (21) durch einen Trimmschwimmer (26) Ober ein Gestänge (261), so wie in Figur 7 schematisch dargestellt. Bei einer derartigen Ausführung wird der Anstellwinkel des vorderen Tragflügels (21) automatisch reduziert wenn er in Richtung Wasseroberfläche ansteigt oder Ober die Höhenruderklappe (213) wird Tiefenruder gegeben. Dieses Prinzip der selbsttätigen Anstellwinkelsteuerung sorgt für eine gleichbleibende Schwimmhöhe. Die Wirkungsweise der selbsttätigen Höhensteuerung über den Trimmschwimmer (26) wird in Figur 8 verdeutlicht, indem zwei verschiedene Wasserstandshöhen eingezeichnet sind. Es bezeichnet (A) die Höhe des Wasserspiegels in Relation zum Wasserfahrzeug bei Stillstand oder Verdrängerfahrt und (B) bei Tragflügelfahrt. Zur Unterscheidung von Figur 7 wird hier die Höhensteuerung über eine Anstellwinkelveränderung des gesamten vorderen Schwimmkörpers (21) dargestellt. Die Positionen von Trimmschwimmer (26), Gestänge (261) und vorderem Schwimmkörper (21) bei Tragflügelfahrt werden gestrichelt dargestellt. Bei Wasserstand (A) sorgt der angehobene Trimmschwimmer (26) über das Gestänge (261) für einen größeren Anstellwinkel des vorderen Schwimmerkörpers (21).

Der Anstellwinkel des vorderen Tragflügels (21) oder der Ausschlag der Höhenruderklappe (213) kann auch über einen elektrischen Servoantrieb gesteuert werden. Als Steuersignal wird auch in diesem Fall die Schwimmhöhe verwendet, wobei sich die beste Einstellung über die Messung der Schwimmhöhe an der Stütze (222) für den hinteren Schwimmer (22) ergibt. Eine elektrische Einstellung der Höhensteuerung ist dann sinnvoll, wenn, wie weiter unten erläutert, zum Zweck einer elektromotorischen Antriebsunterstützung ohnehin eine elektrische Energieversorgung und eine elektronische Steuerung mitgeführt wird.

Es werden ein oder mehrere Hilfsschwimmer (25) benötigt, der oder die das Wasserfahrzeug im Stillstand und bei Verdrängerfahrt, also bei Langsamfahrt tragen. Der oder die Hilfsschwimmer (25) müssen außerdem für ausreichende Kippstabilität bei Stillstand und insbesondere beim Aufsteigen der Besatzung sorgen. Es kann als einzelner Hilfsschwimmer (25) wie in Figur 7 dargestellt, ein Schwimmkörper in der Form eines großen und breiten Surfbretts eingesetzt werden. Allerdings ist ein Surfbrett ein klassischer Gleitschwimmkörper. Gleitereigenschaften werden aber von dem Hilfsschwimmer oder den Hilfsschwimmern (25) nicht gefordert, da er oder sie beim Beginn des Gleitvorgangs auf den Tragflügeln (21, 22) aus dem Wasser gehoben wird oder werden. Deshalb kann es günstiger sein, mindestens zwei Hilfsschwimmer (25) in Form schlanker Katamaranschwimmer zu verwenden, die bis zur Geschwindigkeit des hydrodynamischen Aufgleitens auf Tragfügelfahrt besonders geringe Widerstände in Verdrängerfahrt aufweisen. Denkbar ist auch, je einen Hilfsschwimmer in der Form eines kurzen Surfbretts oder je zwei Hilfsschwimmer als kurze Katamaranschwimmer jeweils an den Stütze (212, 222) für den vorderen Schwimmer (21) oder den hinteren Schwimmer (22) anzubringen. Diese Möglichkeit ist nicht dargestellt.

Der vordere Tragflügel (21) wird zur Kurvensteuerung Ober die Lenkersteuerung (110) in die Kurve gelenkt. Bei der Ausführungsform gemäß Figur 7 gibt es den oben beschriebenen Effekt nicht, wonach sich ein Wasserfahrzeug mit Gleitereigenschaften bei Kurvenfahrt in Folge der Ausbildung von Bugwelle und Wellental von selbst sinnrichtig in die Kurve legt. Dagegen kann und wird sich die Besatzung bei Kurvenfahrt wie ein Fahrradfahrer in die Kurve legen. Die Schwebehöhe des oder der Hilfsschwimmer (25) muss durch geeignete Höhe der Stützen (212, 222) so eingestellt werden, dass die Kanten des oder der Hilfsschwimmer (25) bei allen zu erwartenden Schräglagen nicht in die Wasseroberfläche eintauchen.

Ein Wasserfahrzeug gemäß Figur 7 kann grundsätzlich mit allen vorgenannten Antriebsvarianten ausgeführt werden. Es bietet sich aber besonders an, einen Antrieb über Tretkurbelantrieb mit einer zusätzlichen elektromotorischen Unterstützung vorzusehen. Deshalb werden bei dieser Ausführung einer Schwimmereinheit mit Schwimmkörpern in Form von Tragflügeln weitere Ausführungen einer elektromotorischen Unterstützung beschrieben, die grundsätzlich auch in Kombination mit anderen Ausführungen der Schwimmereinheit in Frage kommen würden.

Eine Schwimmereinheit mit Tragflügeln benötigt eine Geschwindigkeit von mehr als 10 - 12 km/h, um Aufgleiten auf Tragflügelfahrt zu ermöglichen. Trotz des geringen Strömungswiderstands, der auf ein derartiges Wasserfahrzeug wirkt, ist die erforderliche Antriebsleistung, um Tragflügelfahrt aufrecht zu erhalten, für einen Freizeitsportler zu hoch, um dauerhaft aufgebracht zu werden. Aus diesem Grunde ist es gerade auch für diese Ausführungsform besonders vorteilhaft, zur Unterstützung der muskulär erbrachten Leistung zusätzlich gespeicherte elektrische Energie einzusetzen. An Hand von Figur 3 wurde bereits eine mögliche Ausführungsform für eine Antriebsunterstützung durch einen elektrischen Nabenmotor beschrieben. Bei dieser Ausführungsform sind Batterie, Nabenmotor und Steuereinheit in die Schwimmereinheit integriert. Ein Antrieb dieser Art kann ohne Weiteres auch in eine Schwimmereinheit gemäß Figur 7 integriert werden. Diese Ausführung wird deshalb nicht erneut beschrieben oder dargestellt.

Es kann aber auch auf einer Schwimmereinheit (20) ohne eingebauter elektrische Antriebsunterstützung, aber mit einer Antriebsrolle (4), die durch das Hinterrad (122) einer Antriebseinheit (10) angetrieben wird, eine Antriebseinheit (10) montiert werden, die in der Art eines E-Bikes ausgeführt ist. Diese Antriebsausführung ist in Figur 7 dargestellt. Der Elektromotor zur Antriebsunterstützung kann also als Nabenmotor (61) in das Tretlager oder in das Hinterrad (122) integriert sein, die Batterie (614) beispielsweise in den Fahrradrahmen integriert oder an diesem festgelegt, die Steuereinheit (615) am Lenker montiert. Diese Antriebseinheit (10) kann nach der Demontage von der Schwimmereinheit (20)als E-Bike für den Landeinsatz verwendet werden.

Figur 8 zeigt eine weitere bevorzugte Ausführung des Antriebs mit elektrischer Unterstützung. Diese Figur stellt wiederum eine Antriebseinheit dar, die ohne montiertes Hinterrad auf einem Antriebselement (30) der Schwimmereinheit (20) montiert ist. Die Antriebseinheit (10) treibt in diesem Fall in dem Antriebselement (30) kein Antriebsrad (40) für ein mechanisches Getriebe an, sondern einen elektrischen Generator (618). Die Schifischraube (5) wird durch einen Elektromotor (617) angetrieben. Der Elektromotor (617) wird durch die elektrische Energie des Generators (618) versorgt.

Eine elektronische Steuereinheit (615) regelt die Einspeisung zusätzlicher elektrischer Energie aus einer Versorgungsbatterie (614). Die elektronische Steuereinheit (615) kann vollautomatisch einen festen Anteil an gespeicherter Energie einspeisen, so dass jede Bedienung durch den Fahrer entfällt, sie kann aber auch mit einer Regeleinheit verbunden sein, die beispielsweise am Lenker (110) der Antriebseinheit (10) festgelegt werden kann und Ober die verschiedene Betriebszustände des elektrischen Antriebs einstellbar sind:
Ober die Regeleinheit des Wasserfahrzeugs gemäß Figur 8 können wahlweise mehrere oder alle der folgenden Betriebszustände gesteuert werden:
- Antrieb des Elektromotors (617) durch die Energie des Generators (618) mit einem wählbaren Anteil zugespeister Energie aus der Speicherbatterie (614).
- Antrieb des Elektromotors (617) ausschließlich durch die vom Generator (618) gelieferte Energie.
- Antrieb des Elektromotors (617) ausschließlich durch aus der Speicherbatterie (614) eingespeiste Energie. Dieser Betriebszustand ist auch möglich, wenn die Antriebseinheit (10) entfernt ist und die Steuereinheit (615) vom Lenker (110) gelöst ist.
- Aufladen der Speicherbatterie (614) mit der Energie aus dem Generator (618)

## Patentansprüche

1. Wasserfahrzeug (1) mit Muskelkraft-Tretkurbelantrieb durch eine Person, bei dem als Antriebseinheit (10) ein mit oder ohne Räder auf einem surfbrettartigen Schwimmkörper einer Schwimmereinheit (20) montiertes Fahrrad oder eine Antriebseinheit zur Anwendung kommt, die einem Fahrrad für den Einsatz an Land nachempfunden ist, was die Lenkung über Fahrradlenker (110) einschließt,
dass das Wasserfahrzeug (1) sich mit zunehmender Geschwindigkeit gegenüber dem Wasserspiegel mittels in das Wasser eintauchender Tragflügel (21, 22) anhebt und eine hydrodynamische Gleitfahrt ausführt, bei der die Schwimmereinheit (20) sich vollständig von der Wasseroberfläche abhebt,
dass die Steuerung bei hydrodynamischer Gleitfahrt einerseits dadurch erfolgt, dass eine Lenkerbewegung auf einen Tragflügel (21) oder auf eine Lenkflosse übertragen wird und andererseits dadurch erfolgt, dass der Fahrer Kurveninnenlage einnimmt,
**dadurch gekennzeichnet,**
**dass** die Schwimmereinheit (20) beidseitig an dem surfbrettartigen Schwimmkörper abstehende Auslegerschwimmer (23, 24) hat,
**dass** die Auslegerschwimmer (23, 24) beim Übergang in die hydrodynamische Gleitfahrt durch selbständiges mechanisches Anheben hochgefahren werden und dadurch aus dem Wasser gehoben werden,
**dass** ein mit einem Elektromotor (617) gekoppelter Tretkurbelantrieb eine Schiffsschraube (5) antreibt.

2. Wasserfahrzeug (1) gemäß Anspruch 1,
**dadurch gekennzeichnet,**
**dass** der Antrieb der Schifischraube (5) durch die Antriebseinheit (10) direkt vom Tretlager, vom Hinterradantrieb oder von einer vom Hinterrad angetriebenen Rolle (4) Ober Kette, Riemen, Kegelradgetriebe (41) oder einen Hydraulikantrieb erfolgt.

3. Wasserfahrzeug (1) nach mindestens einem der Ansprüche 1 oder 2,
**dadurch gekennzeichnet,**
**dass** die durch Tretkurbelantrieb muskulär aufgebrachte Leistung elektromotorisch unterstützt wird, dergestalt, dass die elektromotorische Leistung am Tretlager, Hinterradantrieb, Antriebsrolle (4) oder Propellernabe eingebracht wird.

4. Wasserfahrzeug (1) nach Anspruch 3,
**dadurch gekennzeichnet,**
**dass** durch Tretkurbelantrieb ein elektrischer Generator (618) angetrieben wird und die Schiftichraube (5) durch einen Elektromotor (617) angetrieben wird, wobei die elektrische Leistung des Generators (618) den Elektromotor (617) versorgt und wobei die elektrische Leistung des Generators (618) durch aus einer elektrischen Speicherbatterie (614) zugespeiste Leistung verstärkt werden kann.

5. Wasserfahrzeug (1) nach mindestens einem der Ansprüche 3 und 4,
**dadurch gekennzeichnet,**
**daß** eine elektrische Steuerung (615) vorgesehen ist, die eine oder mehrere der folgenden Betriebsarten erlaubt:
- Antrieb der Schiffschraube (5) ausschließlich durch muskulär erbrachte Leistung
- Antrieb der Schiffschraube (5) ausschließlich durch Leistung aus einer Speicherbatterie (614)
- Antrieb der Schiffschraube (5) durch muskulär erbrachte Leistung, die durch aus einer Speicherbatterie (614) entnommene Leistung verstärkt wird.
- Aufladen der Speicherbatterie (614) durch die elektrische Leistung des Generators (618).

6. Wasserfahrzeug (1) gemäß einem oder mehreren der vorgenannten Ansprüche,
**dadurch gekennzeichnet,**
**daß** es über zwei Schwimmkörper (21, 22) verfügt, die als Tragflächen unterhalb der Wasseroberfläche ausgelegt sind, wobei eine Tragfläche den vorderen Schwimmkörper (21) und die zweite Tragfläche den hinteren Schwimmkörper (22) bildet und dass zumindest der hintere Schwimmkörper mit zwei Auslegerschwimmern (23, 24) oder mit einem dritten Schwimmkörper (25) versehen ist, der oder die bei Stillstand und Langsamfahrt durch seine oder ihre Verdrängerwirkung das Gewicht des Wasserfahrzeugs (1) trägt oder tragen, aber bei Gleitfahrt vollständig aus dem Wasser auftaucht oder auftauchen.

7. Wasserfahrzeug (1) gemäß Anspruch 6,
**dadurch gekennzeichnet,**
**dass** es mit einem Höhensteuersystem ausgestattet ist, das bewirkt, dass beide als Tragflächen ausgelegten Schwimmkörper (21, 22) in einem geeigneten Höhenniveau unterhalb der Wasseroberfläche gehalten werden, derart, dass die Schwimmerenden auch bei Fahrt mit Kurveninnenlage nicht aus der Wasseroberfläche auftauchen,
**dadurch gekennzeichnet,**
**dass** das Höhensteuersystem eine Höhenruderklappe (213) an mindestens einem der Schwimmkörper (21, 22) umfasst oder dassder Anstellwinkel mindestens eines Schwimmkörpers (21, 22) insgesamt verstellbar ist, wobei die Höhenruderklappe (213) oder der Schwimmkörper (21, 22) insgesamt über einen elektrischen Servoantrieb oder von einem Trimmschwimmer (26) aus über ein Gestänge (261) angesteuert wird, derart, dass bei zu hoher Schwimmlage automatisch Tiefensteuer und bei zu tiefer Schwimmlage Höhensteuer gegeben wird.

8. Wasserfahrzeug (1) nach einem oder mehreren der vorgenannten Ansprüche,
dadurch gekennzeicnet,
dass nach Trennung der Antriebseinheit (10) von der Schwimmereinheit (20) die Antriebseinheit (10), gegebenenfalls nach Montage von Rädern (112, 122), als Fahrrad oder Fahrrad mit elektromotorischer Unterstützung für den Betrieb an Land und die Schwimmereinheit (20), gegebenenfalls nach Demontage der Schiffschraube (5) für Windsurfing, Paddeln, Rudern oder, bei elektromotorischem Antrieb der Schiffschraube (5) gemäß Anspruch 4, für reine Motorfahrt zu verwenden ist.

9. Wasserfahrzeug (1) nach Anspruch 7,
**dadurch gekennzeichnet,**
**dass** nach Trennung der Halteeinrichtung (32) für die Antriebseinheit (10) von der Schwimmereinheit (20) der Verbund aus Antriebseinheit (10) und Halteeinrichtung (32) gegebenenfalls im Verbund mit einer Antriebsrolle (4) oder einem Generator (618) als autarker Heimtrainer, insbesondere Rollentrainer zu verwenden ist.

10. Wasserfahrzeug (1) nach mindestens einem der Ansprüche 7 oder 8,
**dadurch gekennzeichnet,**
**dass** die Durchführung (1122) der Lenkersteuerung durch die Schwimmereinheit (20) beim Betrieb für Windsurfing zur Aufnahme (74) für einen Surfmast dient und dass diese Durchführung (1122) längsverstellbar ausgeführt ist, wodurch in der Ausführung für den Tretkurbelantrieb die Anpassung an unterschiedliche Geometrien der Antriebseinheit (10) und in der Ausführung für Windsurfing eine Verschiebung der Mastbefestigung möglich ist.

11. Wasserfahrzeug (1) nach einem oder mehreren der vorgenannten Ansprüche,
**dadurch gekennzeichnet,**
**dass** das Wasselfahrzeug (1) wahlweise in mehreren oder allen der nachfolgenden Betriebsvarianten eingesetzt werden kann:
- durch Verwendung eines Fahrrads als Antriebseinheit (10) als Wasserfahrzeug (1) mit Muskelkraftantrieb
- durch zusätzliche Verwendung eines elektromotorischen Unterstützungsantriebs (61, 617), als Wasserfahrzeug mit Muskelkraftantrieb und Elektrounterstützung
- durch Verwendung einer Steuerung (615, 615a), die auch den elektromotorischen Antrieb ohne muskulären Energieeinsatz erlaubt, als Motorboot
- durch Entfernung der Antriebseinheit (10) und des Antriebselements (30) und optional auch der Steuerflosse (211), sowie den Ersatz des Antriebselements (30) durch eine Heckflosse für den Paddelbetrieb
- durch Entfernen der Antriebseinheit (10) und des Antriebselements (30) und Ersatz durch ein Windsurfrigg (70) als Windsurfer.
- Verwendung des als Antriebseinheit (10) eingesetzten Fahrrads nach Demontage von der Schwimmereinheit (20) als Fahrrad an Land
- Verwendung des als Antriebseinheit (10) eingesetzten Fahrrads mit elektrischer Antriebsunterstützung nach Demontage von der Schwimmereinheit (20) als Elektrofahrrad an Land.
- Verwendung des Wasserfahrzeugs (1), bei dem die Antriebseinheit (10) einen elektrischen Generator (618) antreibt, im Stillstand oder an Land als Ladegerät für die Versorgungsbatterie (614) oder andere Batterien oder als Energieversorger für andere elektrische Geräte.
- Verwendung der Antriebseinheit (10) gemeinsam mit der Vorrichtung zur Befestigung der Antriebseinheit auf der Schwimmereinheit (20) und dem elektrischen Generator (618) nach deren Demontage von der Schwimmereinheit (20) als autarkes Trainingsgerät und als Ladegerät für Batterien oder als Energieversorger für andere elektrische Geräte.
- Verwendung der Schwimmereinheit (20) als Badeinsel und Liegefläche

12. Wasserfahrzeug (1) nach einem oder mehreren der vorgenannten Ansprüche,
**dadurch gekennzeichnet,**
**dass** mehrere Antriebseinheiten (10) und Schwimmkörper (20) hintereinander koppelbar sind, indem jeweils die Vorderradgabel einer hinten angekoppelten Antriebseinheit (10) auf dem Ende des hinteren Schwimmkörpers (22) des vorangestellten Wasserfahrzeugs (1) festgelegt wird, wobei die Vorderradlenkung (110) der hinten angekoppelten Antriebseinheiten (10) blockiert wird, so dass eine Lenkbewegung der Vorderradlenkung (110) nur für die vorderste Antriebseinheit (10) möglich ist.

## Claims

1. Watercraft (1) comprising a muscular-power pedal-crank drive powered by a person, in which a bicycle, which is with or without wheels and is mounted on a surfboard-like floating body of a float unit (20), or a drive unit is used as a drive unit (10), which unit is based on a bicycle for use on land and includes steering by means of bicycle handlebars (110), such that, as the speed increases, the watercraft (1) lifts relative to the water level by means of hydrofoils (21, 22) which are submerged in the water, and hydrodynamically planes, during which the float unit (20) completely lifts from the water surface, such that the control during the hydrodynamic planing takes place such that a handlebar movement is transmitted to a hydrofoil (21) or to a steering fin and such that the driver leans into curves, **characterised in that** the float unit (20) has protruding outrigger floats (23, 24) on both sides of the surfboard-like floating body, **in that** the outrigger floats (23, 24) are raised by means of an independent mechanical lifting movement during the transition into hydrodynamic planing, and are thereby lifted out of the water such that a pedal-crank drive coupled to an electric motor (617) drives a propeller (5).

2. Watercraft (1) according to claim 1, **characterised in that** the propeller (5) is driven, by means of the drive unit (10), directly by the bottom bracket, by the rear wheel drive or by a roller (4) driven by the rear wheel, via a chain, belt, bevel gear (41) or a hydraulic drive.

3. Watercraft (1) according to at least one of claims 1 or 2, **characterised in that** the power applied via muscles by means of the pedal-crank drive is supported by an electric motor, such that the electromotive power is introduced at the bottom bracket, rear wheel drive, drive roller (4) or propeller hub.

4. Watercraft (1) according to claim 3, **characterised in that** an electric generator (618) is driven by means of the pedal-crank drive and the propeller (5) is driven by an electric motor (617), the electric power from the generator (618) supplying the electric motor (617), and it being possible to amplify the electric power of the generator (618) by means of power provided by an electric storage battery (614).

5. Watercraft (1) according to at least one of claims 3 and 4, **characterised in that** an electrical controller (615) is provided which allows one or more of the following forms of operation:
- driving the propeller (5) exclusively by means of muscular power
- driving the propeller (5) exclusively by means of power from a storage battery (614)
- driving the propeller (5) by means of muscular power which is amplified by power extracted from a storage battery (614)
- charging the storage battery (614) by means of the electrical power from the generator (618).

6. Watercraft (1) according to one or more of the preceding claims, **characterised in that** it has two floating bodies (21, 22) which are designed as hydrofoils below the water surface, one hydrofoil forming the front floating body (21) and the second hydrofoil forming the rear floating body (22), and **in that** at least the rear floating body is provided with two outrigger floats (23, 24) or with a third floating body (25), which, by means of the displacement effect thereof, support(s) the weight of the watercraft (1) when at a standstill and moving slowly, but completely emerge(s) from the water during planing.

7. Watercraft (1) according to claim 6, **characterised in that** it is equipped with a height control system which causes both floating bodies (21, 22) which are designed as hydrofoils to be kept at a suitable level below the surface of the water, such that the float ends do not emerge from the water surface even when travelling leaning into curves, **characterised in that in that** the height control system comprises an elevator flap (213) on at least one of the floating bodies (21, 22) or **in that** the angle of attack of at least one floating body (21, 22) can be adjusted as a whole, wherein the elevator flap (213) or the floating body (21, 22) is controlled as a whole via an electric servo drive or by a trim float (26) via a linkage (261), such that automatic depth control is provided when the floating position is too high, and height control is provided when the floating position is too low.

8. Watercraft (1) according to one or more of the preceding claims, **characterised in that**, after separating the drive unit (10) from the float unit (20), the drive unit (10), optionally after mounting wheels (112, 122), is to be used as a bicycle, or as a bicycle which has electromotive support, for operation on land, and, the float unit (20), optionally after removing the propeller (5), is to be used for windsurfing, paddling, rowing or, when driving the propeller (5) electromotively according to claim 4, for purely motor-powered movement.

9. Watercraft (1) according to claim 7, **characterised in that**, after separating the holding device (32) for the drive unit (10) from the float unit (20), the combination of the drive unit (10) and holding device (32), optionally in combination with a drive roller (4) or a generator (618), is to be used as a stand-alone exercise bike, in particular on rollers.

10. Watercraft (1) according to at least one of claims 7 or 8, **characterised in that** the feedthrough (1122) of the handlebar control through the float unit (20) is used during operation for windsurfing as a receptacle (74) for a surf mast and **in that** this feedthrough (1122) is designed to be longitudinally adjustable, as a result of which it is possible to adapt to different geometries of the drive unit (10) in the embodiment for the pedal-crank drive, and it is possible to move the mast attachment in the embodiment for windsurfing.

11. Watercraft (1) according to one or more of the preceding claims, **characterised in that** the watercraft (1) can optionally be utilised in a plurality of or all of the following operational variants:
- as a watercraft (1) which uses muscular power, by using a bicycle as a drive unit (10)
- as a watercraft which uses muscular power and electric support, by using an electromotive support drive (61, 617) in addition
- as a motor boat, by using a controller (615, 615a) which also allows electromotive drive without using muscular energy
- for paddle operation, by removing the drive unit (10) and the drive element (30) and optionally also the control fin (211), as well as replacing the drive element (30) with a tail fin
- for wind surfing, by removing the drive unit (1) and the drive element (30) and replacing them with a windsurfing rig (70)
- using the bicycle utilised as a drive unit (10) as a bicycle on land after being removed from the float unit (20)
- using the bicycle utilised as a drive unit (10) together with electrical drive support as an electric bicycle on land after being removed from the float unit (20)
- using the watercraft (1), in which the drive unit (10) drives an electric generator (618), as a charger for the supply battery (614) or other batteries or as an energy provider for other electrical equipment when at a standstill or on land.
- using the drive unit (10), together with the device for attaching the drive unit to the float unit (20) and the electric generator (618), as a stand-alone training device and as a charger for batteries or as an energy provider for other electrical equipment, after removing said components from the float unit (20)
- use of the float unit (20) as a bathing island and a surface for lying on

12. Watercraft (1) according to one or more of the preceding claims, **characterised in that** a plurality of drive units (10) and floating bodies (20) can be coupled one behind the other by the front fork of each rear-coupled drive unit (10) being secured to the end of the rear floating body (22) of the previous watercraft (1); the front wheel steering (110) of the rear-coupled drive units (10) being blocked, such that a steering movement of the front wheel steering (110) is possible only for the frontmost drive unit (10).

## Revendications

1. Véhicule nautique (1) doté d'un entraînement par pédalier sous l'action de la force musculaire d'une personne, dans lequel est utilisée, en tant qu'unité d'entraînement (10), une bicyclette pourvue ou dépourvue de roues qui est montée sur un corps de flottaison d'une unité de flottaison (20), du type planche de surf, ou une unité d'entraînement s'inspirant d'une bicyclette affectée à l'usage terrestre, ce qui inclut le braquage par l'intermédiaire d'un guidon (110) de la bicyclette,
sachant que, lorsque la vitesse augmente par rapport au niveau de l'eau, ledit véhicule nautique (1) se soulève au moyen d'une aile portante (21, 22) plongeant dans l'eau, et exécute une course de glissement hydrodynamique durant laquelle ladite unité de flottaison (20) se soulève totalement hors de la surface de l'eau,
sachant que, lors d'une course de glissement hydrodynamique, la commande est effectuée, d'une part, du fait qu'un mouvement de braquage est répercuté sur une aile portante (21) ou sur un aileron directionnel et, d'autre part, du fait que le pilote prend une position à l'intérieur d'une courbe,
**caractérisé par le fait**
**que** l'unité de flottaison (20) comporte des flotteurs (23, 24) en porte-à-faux qui dépassent, de part et d'autre, au-delà du corps de flottaison du type planche de surf, que, lors du passage à la course de glissement hydrodynamique, lesdits flotteurs (23, 24) en porte-à-faux sont relevés par soulèvement mécanique autonome, et sont par conséquent soulevés hors de l'eau,
**qu'**un entraînement par pédalier, couplé à un moteur électrique (617), entraîne une hélice (5) de l'embarcation.

2. Véhicule nautique (1) selon la revendication 1,
**caractérisé par le fait**
**que** l'entraînement de l'hélice (5) de l'embarcation, par l'unité d'entraînement (10), est assuré directement à partir du palier de pédalier, de l'entraînement de la roue arrière ou d'un rouleau (4) entraîné par ladite roue arrière, par l'intermédiaire d'une chaîne, d'une courroie, d'un engrenage conique (41) ou d'un entraînement hydraulique.

3. Véhicule nautique (1) selon au moins l'une des revendications 1 ou 2,
**caractérisé par le fait**
**que** la puissance, développée musculairement à l'aide de l'entraînement par pédalier, est assistée par moteur électrique, de façon telle que la puissance électromotrice soit injectée au niveau du palier de pédalier, de l'entraînement de la roue arrière, du rouleau d'entraînement (4) ou du moyeu d'hélice.

4. Véhicule nautique (1) selon la revendication 3,
**caractérisé par le fait**
**qu'**un générateur électrique (618) est entraîné à l'aide de l'entraînement par pédalier, et l'hélice (5) de l'embarcation est entraînée par l'intermédiaire d'un moteur électrique (617), sachant que la puissance électrique dudit générateur (618) alimente ledit moteur électrique (617), et sachant que ladite puissance électrique du générateur (618) est amplifiée par une puissance additionnellement fournie à partir d'une batterie d'accumulation électrique (614).

5. Véhicule nautique (1) selon au moins l'une des revendications 3 et 4,
**caractérisé par le fait**
**qu'**il est prévu une commande électrique (615) autorisant l'un ou plusieurs des modes de fonctionnement suivants :
- entraînement de l'hélice (5) de l'embarcation exclusivement par une puissance développée musculairement
- entraînement de ladite hélice (5) de l'embarcation exclusivement par une puissance provenant d'une batterie d'accumulation (614)
- entraînement de ladite hélice (5) de l'embarcation par une puissance développée musculairement et amplifiée par une puissance prélevée d'une batterie d'accumulation (614)
- mise en charge de ladite batterie d'accumulation (614) par la puissance électrique du générateur (618).

6. Véhicule nautique (1) selon l'une ou plusieurs des revendications précédentes,
**caractérisé par le fait**
**qu'**il dispose de deux corps de flottaison (21, 22) conçus comme des surfaces portantes, au-dessous de la surface de l'eau, une surface portante formant le corps de flottaison (21) antérieur, et la seconde surface portante formant le corps de flottaison (22) postérieur ; et par le fait qu'au moins ledit corps de flottaison postérieur et pourvu de deux flotteurs (23, 24) en porte-à-faux ou d'un troisième corps flottant (25) qui, à l'arrêt et lors d'une course lente, supporte(nt) le poids dudit véhicule nautique (1) du fait de leur (son) action de refoulement, mais qui émerge(nt) totalement hors de l'eau lors d'une course glissante.

7. Véhicule aquatique (1) selon la revendication 6,
**caractérisé par le fait**
**qu'**il est équipé d'un système de commande de hauteur ayant pour effet de maintenir les deux corps de flottaison (21, 22), réalisés comme des surfaces portantes, à un niveau en hauteur adéquat au-dessous de la surface de l'eau, de telle sorte que les extrémités des flotteurs n'émergent pas hors de ladite surface de l'eau, également lors d'une course avec position à l'intérieur d'une courbe,
**caractérisé par le fait**
**que** ledit système de commande de hauteur inclut un volet de gouvernail en hauteur (213) sur au moins l'un des corps de flottaison (21, 22) ; ou par le fait que l'angle d'attaque d'au moins un corps de flottaison (21, 22) est globalement réglable, sachant que ledit volet de gouvernail en hauteur (213) ou ledit corps de flottaison (21, 22) est piloté, dans son ensemble, par l'intermédiaire d'un servomoteur électrique ou à partir d'un flotteur de compensation (26) par l'intermédiaire d'une tringlerie (261), de manière à procurer automatiquement une maîtrise de la profondeur en cas de position de flottaison trop haute, et une maîtrise de la hauteur en cas de position de flottaison trop basse.

8. Véhicule nautique (1) selon l'une ou plusieurs des revendications précédentes,
**caractérisé par le fait**
**que**, lorsque l'unité d'entraînement (10) a été dissociée d'avec l'unité de flottaison (20), ladite unité d'entraînement (10) et ladite unité de flottaison (20) sont utilisables, respectivement, en tant que bicyclette ou bicyclette à assistance par moteur électrique dédiée au fonctionnement sur terre, le cas échéant après montage de roues (112, 122) ; ou bien, le cas échéant après démontage de l'hélice (5) de l'embarcation, en vue de pratiquer la planche à voile, le pagayage ou l'aviron, voire pour un déplacement motorisé proprement dit lorsque ladite hélice (5) de l'embarcation est entraînée par moteur électrique, en conformité avec la revendication 4.

9. Véhicule nautique (1) selon la revendication 7,
**caractérisé par le fait**
**que**, lorsque le dispositif de maintien (32) dévolu à l'unité d'entraînement (10) a été dissocié d'avec l'unité de flottaison (20), l'ensemble combiné comprenant ladite unité d'entraînement (10) et ledit dispositif de maintien (32) est utilisable en tant qu'appareil autonome d'exercices à domicile, notamment appareil d'exercices à rouleaux, le cas échéant en association avec un rouleau d'entraînement (4) ou un générateur (618).

10. Véhicule nautique (1) selon au moins l'une des revendications 7 ou 8,
**caractérisé par le fait**
**que** le passage (1122), par lequel la commande du guidon traverse l'unité de flottaison (20), sert de logement (74) affecté à un mât de surf lors du fonctionnement dédié à la pratique de la planche à voile ; et par le fait que ce passage traversant (1122) est conçu avec longueur réglable, autorisant ainsi l'adaptation à différentes géométries de l'unité d'entraînement (10) dans la réalisation dévolue à l'entraînement par pédalier, et un déplacement de la fixation dudit mât dans la réalisation dévolue à la pratique de la planche à voile.

11. Véhicule nautique (1) selon l'une ou plusieurs des revendications précédentes,
**caractérisé par le fait**
**que** ledit véhicule nautique (1) peut être utilisé, sélectivement, dans plusieurs ou dans l'intégralité des variantes de fonctionnement suivantes :
- en tant que véhicule nautique à entraînement par force musculaire, en employant une bicyclette en tant qu'unité d'entraînement (10)
- en tant que véhicule nautique (1) à entraînement par force musculaire et assistance électrique, en employant additionnellement un entraînement (61, 617) d'assistance par moteur électrique
- en tant que bateau à moteur, en employant une commande (615, 615a) autorisant également l'entraînement par moteur électrique sans recours à de l'énergie musculaire
- pour le pagayage, par dépose de l'unité d'entraînement (10) et de l'élément d'entraînement (30), et également de l'aileron de commande (211) en option, ainsi que par remplacement dudit élément d'entraînement (30) par un aileron postérieur
- en tant que planche à voile, par dépose de l'unité d'entraînement (10) et de l'élément d'entraînement (30), et remplacement par un gréement (70) de planche à voile
- emploi de la bicyclette, utilisée comme unité d'entraînement (10), en tant que bicyclette à usage terrestre après démontage d'avec l'unité de flottaison (20)
- emploi de la bicyclette à assistance électrique d'entraînement, utilisée comme unité d'entraînement (10), en tant que bicyclette électrique à usage terrestre après démontage d'avec l'unité de flottaison (20)
- emploi, à l'arrêt ou à terre, du véhicule nautique (1) dans lequel l'unité d'entraînement (10) entraîne un générateur électrique (618), en tant que chargeur dédié à la batterie d'alimentation (614) ou à d'autres batteries, ou en tant que pourvoyeur d'énergie affecté à d'autres appareils électriques
- emploi de l'unité d'entraînement (10) conjointement au générateur électrique (618) et au dispositif de fixation de ladite unité d'entraînement sur l'unité de flottaison (20), après leur démontage d'avec ladite unité de flottaison (20), en tant qu'appareil autonome d'exercices et en tant que chargeur dédié à des batteries, ou en tant que pourvoyeur d'énergie affecté à d'autres appareils électriques
- emploi de l'unité de flottaison (20) en tant qu'îlot de baignade et surface de couchage.

12. Véhicule nautique (1) selon l'une ou plusieurs des revendications précédentes,
**caractérisé par le fait**
**que** plusieurs unités d'entraînement (10) et plusieurs corps flottants (20) peuvent être couplés en succession par consignation à demeure respective de la fourche de roue avant d'une unité d'entraînement (10), couplée à l'arrière, sur l'extrémité du corps flottant postérieur (22) du véhicule nautique (1) précédent, le système (110) de braquage des roues avant des unités d'entraînement (10), couplées à l'arrière, étant alors bloqué de façon telle qu'un mouvement de braquage dudit système (110) de braquage des roues avant soit possible uniquement pour l'unité d'entraînement (10) située le plus à l'avant.
